(19) **Europäisches Patentamt**

**European Patent Office**

**Office européen des brevets**

(11) **EP 1 222 078 B1**

(12) **EUROPEAN PATENT SPECIFICATION**

(45) Date of publication and mention
of the grant of the patent:
**18.02.2004 Bulletin 2004/08**

(51) Int Cl.⁷: **B60C 15/024**, B60B 21/10,
B60C 15/02, B60B 21/02

(21) Application number: **99950232.1**

(22) Date of filing: **06.10.1999**

(86) International application number:
**PCT/US1999/023312**

(87) International publication number:
**WO 2001/025030 (12.04.2001 Gazette 2001/15)**

(54) **TIRE WITH KNURLS IN BEAD SURFACE**

REIFEN MIT VERZAHNUNG IN DER WULSTOBERFLÄCHE

PNEU DOTE DE STRIES DANS LA SURFACE DE SON TALON

(84) Designated Contracting States:
**DE FR GB IT**

(43) Date of publication of application:
**17.07.2002 Bulletin 2002/29**

(73) Proprietor: **The Goodyear Tire & Rubber
Company
Akron, Ohio 44316-0001 (US)**

(72) Inventors:
• **KORNELIS, Hendrik
L-9281 Diekirch (LU)**
• **GUILLAUME, Pascal
B-6600 Bastogne (BE)**

(74) Representative: **Kutsch, Bernd
Goodyear S.A.
Patent Department
7750 Colmar-Berg (LU)**

(56) References cited:
**BE-A- 675 106        US-A- 1 396 515
US-A- 4 015 652       US-A- 4 561 481**

• **PATENT ABSTRACTS OF JAPAN vol. 017, no.
524 (M-1483), 21 September 1993 (1993-09-21) &
JP 05 139106 A (SUMITOMO RUBBER IND LTD),
8 June 1993 (1993-06-08)**
• **PATENT ABSTRACTS OF JAPAN vol. 018, no.
526 (M-1683), 5 October 1994 (1994-10-05) & JP
06 183223 A (SUMITOMO RUBBER IND LTD), 5
July 1994 (1994-07-05)**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

**Technical Field**

This invention relates to pneumatic tires and, more particularly, to their tendency to slip with respect to the rims on which they are mounted when torque beyond a certain limit is applied.

**Background Art**

A pneumatic tire is secured to a rim by the interaction between the bead of the tire and the rim. The quantity of force holding the tire to the rim $F_B$ is equal to the flange force and the bead force. The flange force is calculated by multiplying the surface area of contact between the bead and the rim $A_f$ with the average pressure on the flange $P_f$. The pressure on the flange outside the footprint is roughly the same as the air pressure within the tire. In the footprint area, the flange pressure dramatically increases. The bead force is calculated by multiplying the pressure exerted by the bead hoop $P_B$ and the surface area of the bead in contact with the rim $A_B$. Thus, $F_B = (P_f \times A_f) + (P_B \times A_B)$.

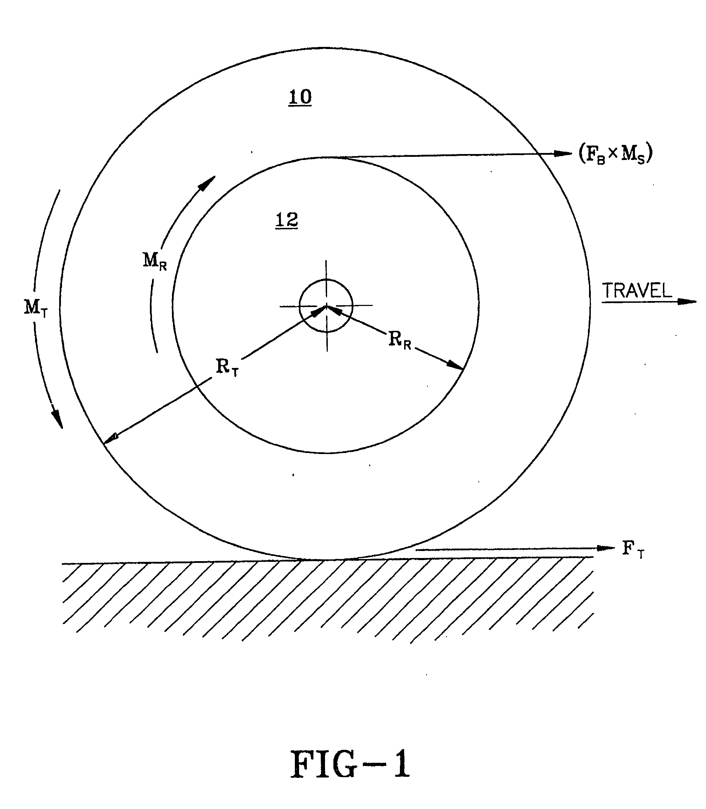

Tire slippage can occur when a high torque load is applied to a tire. Such high torque loads are common in many applications, such as a tractor pulling a plow. A tire will slip on a rim when the torque moment $M_T$ is greater than the moment $M_R$ holding the tire on the rim, shown in Fig. 1. The torque moment $M_T$ is calculated by multiplying the force applied to the tire $F_T$ and the radius from the axis of rotation to the radially outermost surface of the tire $R_T$. The moment $M_R$ holding the tire on the rim is calculated by multiplying the force holding the tire on the rim $F_B$ and the radius from the axis of rotation to the rim and bead connection $R_R$, and the static coefficient of friction between the bead surface and the rim surface, $\mu_s$. When $F_T \times R_T$ is greater than $F_B \times R_R \times \mu_s$, the tire will slip on the rim. When $F_T \times R_T$ is less than or equal to $F_B \times R_R \times \mu_s$ the tire will not slip on the rim.

$$F_T > (F_B \times R_R \times \mu_s)/R_T, \text{ slippage.}$$

$$F_T \le (F_B \times R_R \times \mu_s)/R_T, \text{ no slippage.}$$

Slippage of the tire on the rim has become an increasing problem with the continuing trend of manufacturers building larger and higher horsepower tractors. As the size and horsepower of tractors increase, the torque loads that the tires may be subjected to increases. As a result, the likelihood of tire slippage increases.

Another reason for tire slippage in large tires, such as farm tires, is that many of these tires are lubricated with a water-based lubricant to aid in the mounting process. After the tire is mounted on the rim, the water base in the lubricant dries, leaving a residue between the rim and the tire. As the tire enters a wet environment, water that migrates to the area between the rim and the tire reactivates the lubricant. As the lubricant becomes reactivated by the water, the coefficient of static friction $\mu_s$ is lowered and slippage is much more likely to occur.

One solution to the problem of tire slippage is to glue the tire to the rim. The glue increases the moment $M_R$ holding the tire on the rim because an adhesion force $F_A$ is added. Thus, when the tire is glued to the rim:

$$F_T > ((F_B \times R_R \times \mu_s) + (F_A \times R_R))/R_T, \text{ slippage.}$$

$$F_T \le ((F_B \times R_R \times \mu_s) + (F_A \times R_R)/R_T, \text{ no slippage.}$$

Although this solution helps to prevent slippage of the tire on the rim, gluing the tire to the rim is a cumbersome process and creates difficulties in dismounting the tire and placing a new tire on the same rim.

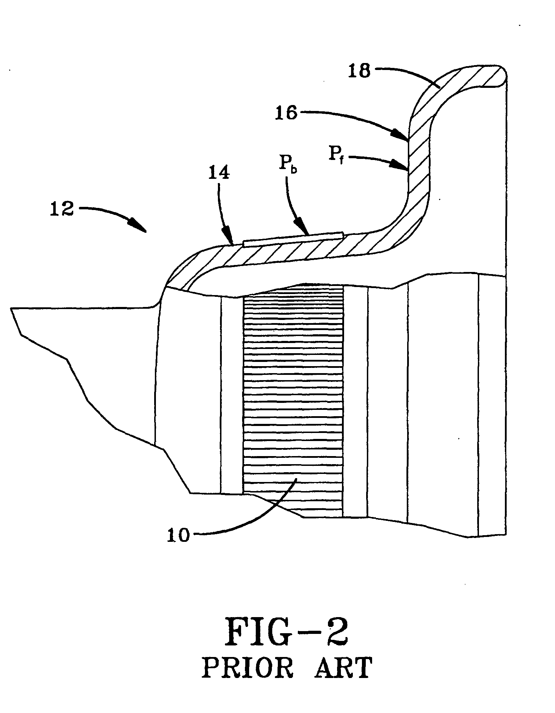

In an attempt to prevent tire slippage in motorcycle tires under stressful conditions, United States Patent No. 4,561,481 endded "TIRE RIM STRUCTURE AND METHOD OF MANUFACTURE" teaches the use of rows of protrusions extending outwardly and integrally with the surface of the rim. These rim protrusions, or rim knurls, are intended to grip, or bite into, the motorcycle tire to prevent slippage. This technique of adding rim knurls has been adopted as a standard in certain tractor design rims, i.e. European Tyre and Rim Technical Organization (ETRTO), 1995 Standard Manual, page R32, shown in Fig. 2.

Rim knurls are common because the metal knurls bite into the softer rubber and grip the tire. Since the knurls grip the tire, the tire will not slip unless the force applied to the knurls is great enough to either shear each of them off of the rim or to tear the rubber being gripped by each of the knurls. A tire will be able to withstand a greater torque before slipping on the rim if this shear force $F_S$ multiplied by the number of knurls, $\Sigma_N$, is greater than the loss of force holding the tire on the rim. The loss of force holding the tire on the rim results from two sources. First, the rubber of the bead surface may not deform sufficiently to completely fill the area between the rim knurls. The amount surface area contact between the rim and the bead surface may decrease as a result of this lack of deformation. If a decrease in surface area contact results, the force holding the tire on the rim $F_{B2}$ will also decrease. Secondly, when the bead surface is contacted by rim knurls, the pressure of the bead surface against the rim will vary across the area between adjacent knurl peaks. The pressure will be the greatest at the peak of each knurl and will equal either the respective flange pressure $P_f$ or the bead pressure $P_B$ depending upon the location of the knurls on the rim. This pressure will decrease as to the distance from the knurl peak increases. This decrease in pressure is due to the surface tension of the rubber of the bead surface limiting the amount of deformation and preventing the rubber from completely filling the area between the knurls. As a result of this surface tension, the pressure will decrease from a maximum level at the knurl peak to zero at the point on the knurl sidewall where the rubber stops making contact with the knurl.

United States Patent No. 4,015,652 shows a tire and rim assembly where both the vertical area of the tire and the rim flange have a plurality of protrusions. Each of the protrusions disclosed in this patent forms a complete line extending circumferentially around the tire and the rim. The protrusions increase the surface area between the two surfaces. where an adhesive is applied to help retain a deflated tire on the rim. Although the increased area of contact caused by the disclosed protrusions may slightly increase the amount of torque the tire can withstand before slippage occurs, the disclosure shows no teaching concerning tire slippage. Additionally, the circumferential orientation of the protrusions will not provide any shear force resistance to tire slippage.

The most relevant prior art patent which corresponds to the preamble of claim 1 is U.S. 1,396,515 dated November 8, 1921, teaches a pneumatic tire suited for mounting on a rim having knurls designed to engage a bead surface of the tire where the tire has knurls, the knurls on the tire having a location and a pitch complimentary to the knurls on the rim such that the knurls interlock with the knurls on the rim 9 in order to prevent tire slip.

## Summary of the Invention

This invention relates to a pneumatic tire 10. The pneumatic tire 10 has a bead 30 for mounting the tire 10 on a rim 12. The tire 10 is particularly suited for mounting on a design rim 12 having knurls 20. The rim knurls 20 are designed to engage the bead surface 28 of the tire 10. The bead surface 28 includes a bead base 36, a radially inner flange contacting surface 38, and a radially outer flange contacting surface 10.

The tire 10 of the invention has knurls 42. The tire knurls 42 have a location and a pitch that is complementary to the knurls 20 specified by applicable rim standards for the tire's size such that the tire knurls 42 interlock with the rim knurls 20 when the tire 10 is mounted on the design rim 12 at all three locations 36, 38 and 40. By interlocking the rim knurls 20 and the tire knurls 42, the tire 10 will be less susceptible to slippage. The knurls 42 are preferably of a triangular cross-section as well as the rim knurls 20.

### Definitions

For ease of understanding this disclosure, the following terms are disclosed.

"Bead" means that part of the tire comprising an annular tensile member wrapped by ply cords and shaped, with or without other reinforcement elements such as flippers, chippers, apexes, toe guards and chafers, to fit the rim. The radially inner beads are associated with holding the tire to the rim.

"Bead surface" means the outer portion of the tire near the bead which is in proximity or contacts the rim and consists of the bead toe, the bead base, the bead heel, and the flange contacting surface.

"Bead toe" means that portion of the bead which joins the bead base at the inside surface of the tire.

"Bead heel" means that portion of the bead which joins the bead base at the outer surface of the tire and is in proximity or in contact with the rim when the tire is mounted on the rim.

"Circumferential" means lines or directions extending along a perimeter of the surface of the annular tire parallel to the Equatorial Plane (EP) and perpendicular to the axial direction.

"Design rim" or "rim" means a rim having a specified configuration and width. A design rim is specified by industry standards such as the Tire and Rim Association in the United States, the European Tyre and Rim Technical Organization - Standard Manual in Europe, and the Japan Automobile Tire Manufacturer's Association in Japan.

"Pitch" means the distance from one knurl peak to another.

"Pneumatic tire" means a laminated mechanical device of generally toroidal shape, usually open-torus, having beads and a tread and made of rubber, chemicals, fabric and steel or other materials. When mounted on the wheel of a motor vehicle, the tire through its tread provides traction and contains the fluid that sustains the vehicle load.

"Radial" or "radially" are used to mean directions radially toward or away from the axis of rotation.

## Brief Description of Drawings

The invention will be described by way of example and with reference to the accompanying drawings in which:

FIG. 1 is a schematic displaying the forces acting upon a pneumatic tire to cause it to slip on a rim.
FIG. 2 is a drawing showing a design rim similar to that displayed in European Tyre and Rim Technical Organization (ETRTO), 1995 Standard Manual, page R32.
FIG 3 is a partial view of the invention showing knurls in three locations upon the bead surface.
FIG. 4 is a cross section of the invention showing knurls in three locations upon the bead surface.
FIG. 5 is a cross section of the knurls. FIGS. 5A -5C show some of the various embodiments of the knurls of the invention.
FIG. 6 is a cross section showing the knurls of the invention interlocking with knurls of a rim.

## Detailed Description of the Invention

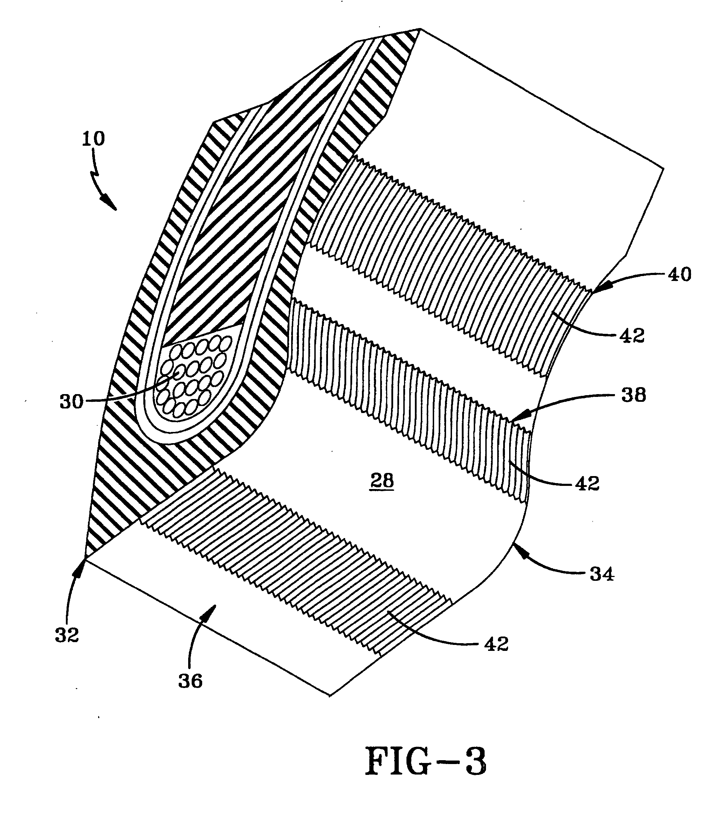

Fig. 3 shows a partial view of the bead portion of a pneumatic tire 10 having a plurality of knurls 42 in three locations of the bead surface 28. The bead surface 28 is the location of the pneumatic tire near the bead 30 that is in proximity to or in contact with the rim 12 when the tire 10 is mounted. The bead surface 28 consists of an area of the tire 10 extending from the bead toe 32 across the bead base 36 to the bead heel 34 and then turning radially outward from the bead heel 34 across the flange contacting surface. The flange contacting surface includes the radially inner flange contacting surface 38 and the radially outer flange contacting surface 40. When the pneumatic tire 10 is mounted on a rim 12, the bead base 36 is in proximity to the bead seat 14 of the rim 12 and the radially outer flange contacting surface 40 is in proximity of the flange radius 18 of the rim flange 16.

The plurality of knurls 42 in the three locations of the bead surface 28 provides the greatest resistance to slippage when the tire 10 is mounted on a rim 12 with corresponding rim knurls 20. Examples of some design rims 12 having knurls 20 are disclosed in European Tyre and Rim Technical Organization (ETRTO), 1995 Standard Manual at page R32 and the Tire and Rim Association, Inc., 1999 Year Book at page 8-41. A first reason for the increased resistance to slippage is that the surface area of contact between the pneumatic tire 10 and the rim 12 is greatest when the rim knurls 20 and the tire knurls 42 interlock. Since the sidewalls 50 of the knurls 42 on the tire 10 contact the sidewalls 52 of the knurls 20 in the run 12, the area of contact increases. When the knurls are interlocked in all three locations of the bead surface 28 and the corresponding rim 12, the surface area of contact is maximized. Additionally, with knurls 42 in all three locations, the number of knurls, $\Sigma_N$, is increased. When the knurls are interlocked, slippage cannot occur unless each knurl of either the rim 12 or the tire 10 is sheared. Thus, a shear force $F_S$ must be overcome before slippage can occur. Where both the pneumatic tire 10 and the rim 12 have interlocking knurls, the force holding the tire to the rim $F_{B3}$ equals $(P_f \times (A_f + A_k)) + (P_B \times (A_B + A_k))$, where $A_k$ is the increased contact area caused by the knurls. Therefore, with the pneumatic tire 10 of the invention used in conjunction with a design rim 12 having knurls 20:

$$F_T > ((F_{B3} \times R_R \times \mu_s) + (F_S \times \Sigma_N \times R_R)/R_T, \text{ slippage.}$$

$$F_T \leq ((F_{B3} \times R_R \times \mu_s) + (F_S \times \Sigma_N \times R_R)/R_T, \text{ no slippage.}$$

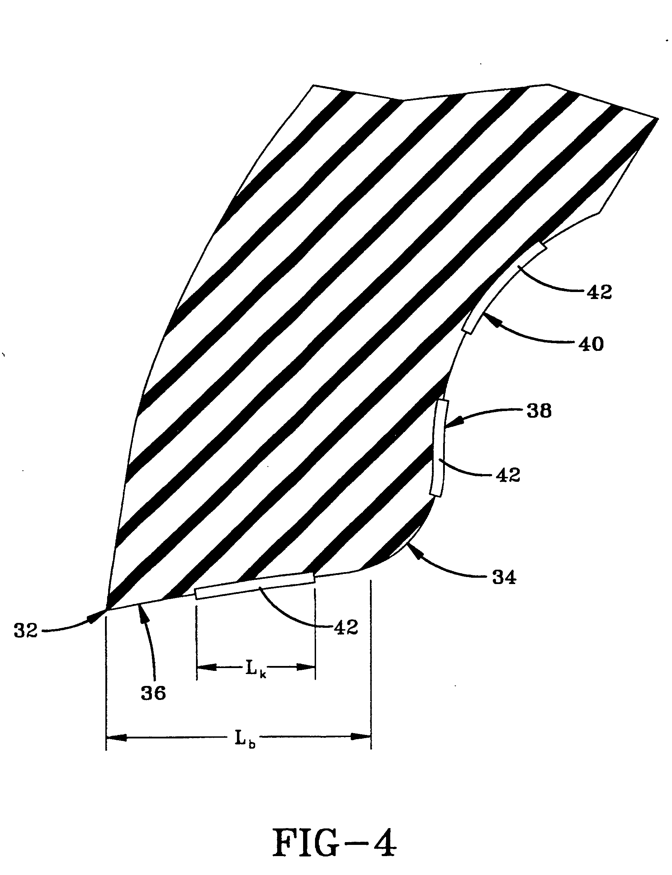

Fig. 4 shows a cross section of the bead portion of a pneumatic tire 10 having knurls 42 in all three locations of the bead surface 28. Although there is no minimum length $L_k$ for the knurls 42, longer knurls 42 will provide greater resistance to slippage by adding surface area contact and greater shear resistance. For best results, the length $L_k$ of the knurls 42 on the bead base 36 should be at least forty percent the length of the bead base $L_b$. However, ideally the length of the knurls 42 will match the length of the rim knurls 20.

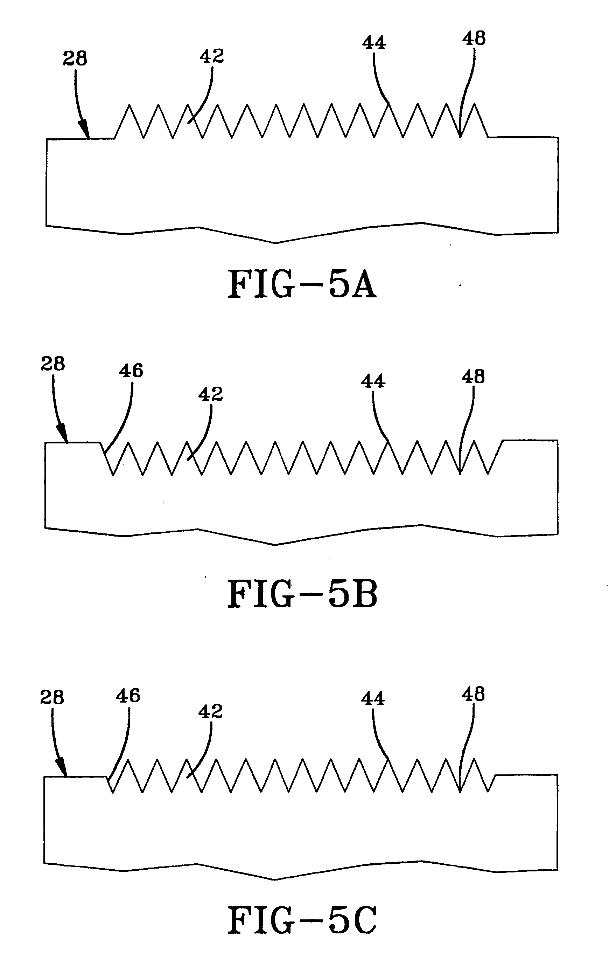

Fig. 5 shows a cross sectional view showing three possible configurations of the knurls 42 on the bead surface 28. Fig. 5A shows a peak 44 of each, respective knurl 42 protruding from the bead surface 28. The base 48 of each knurl 42 is located on the same plane as the bead surface 28. Fig. 5B shows a peak 44 of each knurl 42 located in the same plane as the bead surface 28 and the base 48 of each knurl 42 located in an indention 46 in the bead surface 28. Fig. 5C shows a peak 44 of each knurl 42 protruding from the bead surface 28 and the base 48 of the knurls 42 in an indention 46 in the bead surface 28. Additionally, combinations of the configurations shown in Figs. 5A - 5C and other configurations for knurls are possible.

Although, Fig. 5 shows the knurls 42 having a triangular cross section, the cross section of the knurls 42 may be any shape which provides the desired effects of increasing the surface area and the shear resistance. Ideally, the shape of the knurls 42 will complement the shape of the rim knurls 20.

All of the knurls 42 shown in Figs. 5A - 5C can be molded onto the bead surface 28. The knurls can be formed by either protrusions or recesses in the mold or a combination of both. For the best seal, the tire knurls 42 should be properly designed to fit the appropriate rim knurls 20. If the rim knurls 20 are configured similar to the knurls in Fig. 5A, then the tire knurls 42 should be similar to the knurls of Fig. 5B. Similarly, if the rim knurls 20 are configured similar to the knurls in Fig. 5B, then the tire knurls 42 should be similar to the knurls in Fig. 5A. If the tire knurls 20 are configured similar to the knurls of Fig. 5C, then the tire knurls 42 should also be configured similar to the knurls in Fig. 5C. Although, Figs. 5A -5C show all the knurls 42 having the same depth and pitch, the depth and pitch of the knurl can vary. The most efficient location, length, depth and pitch of the tire knurls 42 match those of the rim knurls 20.

The tire 10 of this invention may be mounted on a rim 12 that does not have knurls 20. However, if this is attempted difficulty may arise in obtaining a proper seal for maintaining air pressure within the tire 10. Since the rubber of the tire knurls 42 will not bite into the metal rim, no shear force resistance will be gained by using the tire 10 on a non-knurled rim. Additionally, surface area contact between the rim and the tire 10 will likely be decreased.

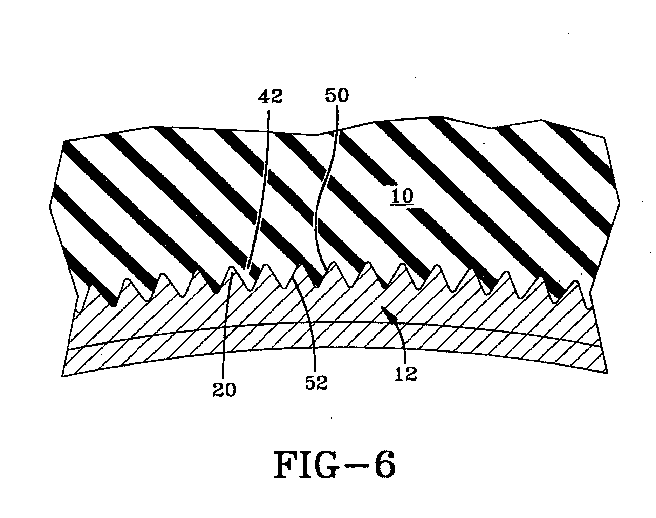

Fig. 6 is a cross section of the knurls 42 on the bead base 36 of a pneumatic tire 10 interlocked with the knurls 20 on the bead seat 14 of a rim 12. Additionally, Fig. 6 shows how each sidewall 50 of the tire knurls 42 interacts with each sidewall 52 of the rim knurls 20 to provide shear resistance to slippage. When the tire knurls 42 are designed to complement the rim knurls 20, the surface area contact between the rim 12 and the bead surface 28 will be increased. The surface area contact is increased as compared to a non-knurled rim because the sidewalls 52 of each rim knurl 20 increases available surface area. This increased surface area is contacted by the tire knurls 42. The surface area contact is increased as compared to a knurled rim 12 because the tire knurls 42 assure contact over the complete area between the rim knurls 20. The pressure of the bead surface 28 against the rim 12 is also equalized when the tire knurls 42 are designed to complement the rim knurls 20. Since surface tension in the bead surface 28 does not pull the tire knurls 42 away from the rim knurl sidewalls 52, the pressure of the bead surface 28 against the rim 12 is constant over the entire knurled surface.

## Claims

1. Pneumatic tire (10) particularly suited for mounting on a rim (12) having knurls (20) on the bead bases facing portions and on the axially inner flanges,

   the tire casing having knurls (42) with a location and a pitch complimentary to the knurls (20) of the rim such that the knurls (42) on the tire (10), when mounted on the rim (12), interlock with the knurls (20) on the rim (12) which knurls are oriented so as to provide shear force resistance to tire slippage wherein the knurls being located in the bead base (36) and in the radially inner flange contacting surface (38); **characterized**

   - **by** the rim (12) being specified by applicable rim standards for the tire's size;
   - by the knurls (42) on the tire being of a complimentary cross-section to the knurls (20) on the rim;
   - by additional knurls being located in the radially outer flange contacting surface (40); and
   - by the knurls being capable of interlocking with the rim(12) in all three locations (36, 38, 40).

2. The tire of claim 1 wherein the knurls (42) have a triangular cross-section.

3. The tire of claim 1 wherein the knurls (42) on the bead base (36) have a length $L_k$ of at least 40% of the length of the bead base $L_b$.

## Patentansprüche

1. Luftreifen (10), der insbesondere für die Montage auf eine Felge (12), die an Abschnitten, die den Wulstunterseiten zugewandt sind, und an den axial inneren Felgenhörnern Rändelungen (20) aufweist, geeignet ist,

   wobei der Reifenunterbau Rändelungen (42) aufweist, deren Ort und Teilung zu den Rändelungen (20) der Felge komplementär sind, so dass sich die Rändelungen (42) am Reifen (10), wenn dieser auf die Felge (12) montiert ist, mit den Rändelungen (20) an der Felge (12) verblocken, wobei die Rändelungen so orientiert sind, dass sie eine Schub- oder Scherfestigkeit gegen Reifenrutschen bewirken, wobei die Rändelungen an der Wulstunterseite (36) und an der radial inneren Felgenhornkontaktfläche (38) angeordnet sind; **dadurch gekennzeichnet, dass**

   - die Felge (12) durch anwendbare Felgenstandards für die Reifengröße spezifiziert ist;
   - die Rändelungen (42) am Reifen einen zu den Rändelungen (20) an der Felge komplementären Querschnitt besitzen;

- an der radial äußeren Felgenhornkontaktfläche (40) zusätzliche Rändelungen angeordnet sind; und
- die Rändelungen sich mit der Felge (12) an allen drei Orten (36, 38, 40) verblocken können.

2. Reifen nach Anspruch 1, bei dem die Rändelungen (42) einen dreieckigen Querschnitt besitzen.

3. Reifen nach Anspruch 1, bei dem die Rändelungen (42) an der Wulstunterseite (36) eine Länge $L_k$ von wenigstens 40 % der Wulstunterseitenlänge $L_b$ besitzen.

**Revendications**

1. Bandage pneumatique (10) particulièrement approprié pour son montage sur une jante (12) possédant des moletages (20) sur les portions opposées aux bases du talon et sur les rebords internes en direction axiale, la carcasse du bandage pneumatique possédant des moletages (42) dont l'emplacement et le pas sont complémentaires à ceux des moletages (20) de la jante de telle sorte que des moletages (42) sur le bandage pneumatique (10), à l'état monté sur la jante (12), entrent en verrouillage réciproque avec des moletages (20) sur la jante (12), lesdits moletages étant orientés de façon à procurer une résistance via une force de cisaillement au patinage du bandage pneumatique, les moletages étant disposés dans la base du talon (36) et dans la surface (38) entrant en contact avec le rebord interne en direction radiale, **caractérisé par le fait que**

- la jante (12) est spécifiée par les normes de jantes d'application pour la dimension du bandage pneumatique ;
- les moletages (42) sur le bandage pneumatique possèdent une section transversale complémentaire à celle des moletages (20) sur la jante ;
- l'on prévoit des moletages supplémentaires sur la surface (40) entrant en contact avec le rebord externe en direction radiale ; et
- les moletages sont capables d'entrer en verrouillage réciproque avec la jante (12) à chacun des trois endroits (36, 38, 40).

2. Bandage pneumatique selon la revendication 1, dans lequel les moletages (42) possèdent une section transversale triangulaire.

3. Bandage pneumatique selon la revendication 1, dans lequel les moletages (42) sur la base du talon (36) possèdent une longueur $L_k$ qui représente au moins 40 % de la longueur de la base du talon $L_b$.

FIG-1

FIG-2
PRIOR ART

FIG-3

FIG-4

**FIG-5A**

**FIG-5B**

**FIG-5C**

FIG-6